# EUROPEAN PATENT APPLICATION

(11) **EP 3 459 919 A1**
(43) Date of publication of application: **27.03.2019**
(21) Application number: 17193050.6
(22) Date of filing: 26.09.2017
(51) Int. Cl.: C04B 33/04, C04B 33/14, C04B 33/24

(54) **CERAMIC MATERIAL AND SLAB COMPRISING A CERAMIC MATERIAL**

(71) Applicant: Flooring Industries Limited, SARL, 8070 Bertrange (LU)
(72) Inventor: BENEVENTI, Claudio, 41049 Sassuolo (MO) (IT); VALERIANI, Lorenzo, 42019 Scandiano (RE) (IT); GRANDI, Linda, 41051 Montale Rangone (MO) (IT)
(74) Representative: Schacht, Benny Marcel Corneel

(57) **Abstract**

A ceramic construction material that has a luminosity value L of more than 92.

## Description

The present invention relates to a ceramic construction material and a slab comprising said ceramic material. In particular, the invention relates to a slab of ceramic material subjected to firing, a worktop, and a wall of a building comprising said slab.

As is known, ceramic materials are non-metallic inorganic materials produced by the consolidation of powder at high temperatures, and are formed from one or more crystalline phases embedded in an amorphous or glass matrix. Ceramic materials are used to produce various types of article such as bricks, bathroom fittings, crockery and tiles or slabs for covering floors and walls.

In particular, ceramic construction materials such as porcelain stoneware, single-fired tiles, red stoneware, terracotta and others are widely used for producing floor and cladding tiles. Because of its remarkable mechanical characteristics, porcelain stoneware may be used to produce not only conventional tiles, but also slabs with a surface area of more than 1.5 m² for both cladding and flooring. Porcelain stoneware slabs may also be used as worktops, for example kitchen or bathroom tops.

WO2016193500 describes a ceramic construction material for producing slabs with a thickness of 7 to 30 mm, for use as wall cladding and for forming worktops.

Cladding tiles and slabs comprise a body of ceramic material in which at least the upper surface is covered with a base coat, comprising at least a glaze and/or an engobe of white, grey or beige colour, on which is applied a pattern which, for example, reproduces the grain of natural stone or wood.

The pattern is usually applied by digital inkjet printing, flexography, screen printing or other printing methods. Since ceramic pigments, particularly digital printing pigments, have a particularly narrow colour range, the base coat is essential for the provision of a base colouring to ensure that the desired pattern is obtained. With this process, however, the pattern is only superficial, and if the slab has to be shaped for its end use, as in the case of kitchen worktops, the pattern is not present on the new edge formed by cutting, making it necessary to provide a further step of decoration, for example by using what is known as a "third firing", or by cold decoration by printing with UV inks, for example. Furthermore, an incorrect choice of material for the covering layer or an error in its application may result in surface defects of the slab, such as crazing or flaking.

An object of the present invention is to overcome the aforementioned drawbacks of the prior art by means of a simple, rational and inexpensive solution. These objects are achieved by the characteristics of the invention stated in the independent claim. The dependent claims describe preferred and/or particularly advantageous aspects of the invention.

A first independent aspect of the invention provides a ceramic construction material that has a luminosity value L of more than 92, or preferably more than 94. The luminosity value was measured according to the ASTM E313 - 00 standard, using a ColorQuest XE colorimeter produced and marketed by Hunter Lab Associated Laboratories Inc. This instrument is essentially a spectrophotometer which identifies colour coordinates of a specimen in a CIE 1*a*b space, and the E313 standard may be used to determine the luminosity value L, white value W and yellow value Y of the specimen on the basis of the measured coordinates and on the basis of the coordinates of a standard specimen used for calibrating the instrument. The luminosity value L indicates how luminous and bright the colour is, a low luminosity value defining a dull, opaque colour. The white value W determines how close the specimen is to the absolute white represented by the standard; the closer the white value W is, the nearer the specimen is to absolute white. The yellow value Y determines the deviation from absolute white. The inventors have surprisingly discovered that a material having a high luminosity value L provides a base for decoration that can maximize the colour rendering, thereby making it unnecessary to use a base coat. The inventors have also discovered that the colour rendering is surprisingly amplified by a ceramic material having a white value W of more than 60, preferably more than 64, or even more preferably more than 68, and a yellow value Y of less than 9, preferably less than 7, or even more preferably less than 5. Thus a ceramic construction material is provided which may be used for producing high-performance articles such a floor tiles or slabs with a surface area of more than 1.5 m², and which provides a base colour such that a wide variety of possible colouring and decoration of the article is ensured, without the need to use a base coat.

According to a preferred aspect of the invention, the construction material has a water absorption level of less than 0.5%, or preferably less than 0.2%, or even more preferably less than 0.1%, measured according to the ISO 10545-3 standard. The ISO 10545-3 standard specifies The water absorption represents an indirect measurement of the porosity of the material; in fact, it is the measurement of the water absorbed through the open pores of the material; in fact, since ceramic materials are produced by hot consolidation of powders, they inevitably have a residual porosity that has a negative effect on the mechanical and surface properties. Because of this aspect, the material is particularly suitable both for applications in which good mechanical properties are required, for floor coverings for example, and for applications in which good surface properties are required, in the case of kitchen worktops for example. Additionally, because the water absorption is so limited, the use of a glaze or engobe for waterproofing the material becomes unnecessary.

According to a preferred embodiment, the ceramic construction material may have a modulus of rupture of more than 25 N/mm², or preferably more than 35 N/mm², measured according to the UNI EN ISO 10545-4 standard. Additionally, according to one aspect, the ceramic construction material comprises at least 50% by weight of the glass phase, or preferably more than 60% by weight. For the purposes of the present invention, the term "glass phase" is taken to mean the amorphous or non-crystalline phase which surrounds the crystalline phases in the ceramic material, and may be measured relative to the mass of the material by conventional techniques such as X-ray diffractometry.

In one embodiment of the invention, the construction material is produced from a mixture of raw materials (mixture) having the following composition (percentages by weight): 20 - 50% clay; 20 - 60% feldspar; 5 - 30% frit; 5 - 30% inert materials.

According to the present invention, the clays are selected from the group comprising smectites (e.g. montmorillonite), kaolins (e.g. kaolinite, halloysite), illites (e.g. illite, mica), and chlorites. Preferably, the proportion of clays in the mixture is between 20% and 50%, or even more preferably between 30% and 50%, for example between 30% and 40%.

Feldspars are silicates rich in alkaline content (atoms of lithium, sodium, potassium, rubidium, caesium and francium) and act in the mixture as fluxes or fluidifying agents to reduce the sintering temperature and the porosity of the construction material. The proportion of feldspars is preferably between 20% and 60%, or even more preferably between 20% and 50%, for example between 30% and 45%.

Frits are glassy substances comprising, for example, oxides of the following elements: Si, Al, Ca, Na, K, Li, Mg, Zr, Ti, B, P, Sn, Fe, Zn, Sr, Ba, which are poured in the melted state directly into water to form a granulated product. Frits may promote the formation of a glass phase or recrystallize, helping to determine the mechanical and physical characteristics of the material and also to determine the colour of the mixture. The mixture may comprise one or more different frits, examples of frits used being the frit of the CMAS and CZAS systems. The proportion of frits is preferably between 5% and 30%, or even more preferably between 5% and 20%, for example between 10% and 20%.

The inert materials are substances promoting stability in the mixture during firing, and have an effect on the chemical and physical properties of the construction material, for example the bending strength, abrasion resistance, durability and colour. Examples of inert materials are quartz sands, zirconium silicate, zirconium oxide, and aluminium oxides. The proportion of inert materials is preferably between 5% and 30%, or even more preferably between 5% and 25%, for example between 10% and 20%.

One aspect of the invention provides a cladding element comprising the material as described in the preceding paragraphs for cladding walls, floors and furniture, and for producing worktops. Preferably, the cladding element is in the form of slabs, where "slab" is taken to mean a substantially flat body having a pair of opposed larger faces, each having a surface area of more than 1.5 m². The slab may be of any shape, for example rectangular, square or hexagonal. Preferably, the slab is of rectangular shape and has a length of more than 1.25 m, even more preferably more than 2 m, for example 3 m, and a width of more than 1 m, even more preferably more than 1.5, for example 2 m. Because of these dimensions, the slab is particularly versatile, since it may subsequently be cut to size for its specific intended use. Advantageously, the slab has a thickness of more than 5 mm, for example more than 15 mm, for example about 30 mm. Thus, because of its greater thickness, the slab has sufficient mechanical strength for exterior applications, for example for exterior flooring or exterior wall cladding, where the slab is laid dry and is not consolidated with a substrate using a mortar or adhesive. However, it is not excluded that the ceramic material according to the invention could be used to form tiles, blocks or other articles.

According to a further aspect of the invention, the slab may have a pattern comprising a design representing any type of graphic form such as the grain of wood, natural stone or cement. The pattern is preferably placed on at least an upper surface of the slab. According to one embodiment of the invention, the pattern may be placed at least partially on the lateral edges of the slab. Thus the slab may be used as a worktop, for steps or in other applications in which the lateral edges of the slab are visible. Preferably, the pattern is provided over all the outer surfaces of the slab. In this way the slab may be installed so as to show both larger faces, or the user may select which face to show. Advantageously, the pattern is present in the slab for a predetermined depth of the slab thickness, said depth preferably being at least 3 mm, or preferably more than 5. Because of this solution, the outer surface of the slab may be ground or polished without compromising the pattern. Even more advantageously, the pattern is present inside the slab, throughout the thickness of the slab. Thus when the slab is cut and a new surface, or a new edge, is formed, this new surface shows the pattern without any need to decorate the new surface.

Preferably, the slab has a stain resistance class of at least 4, preferably 5, measured according to the ISO 10545-14 standard. According to the ISO 10545-14 standard, a surface of a specimen is to be exposed to a specified staining agent, after which one or more specified cleaning procedures, which are progressively more aggressive, are to be executed in sequence. After each cleaning procedure, the stain is visually examined, and, if the stain persists, the next cleaning procedure is carried out; otherwise the test is terminated and the class of resistance may be determined. The resistance class decreases as the number of cleaning procedures needed to remove the stain increases. The ISO 10545-14 standard provides for 5 cleanness classes.

According to one aspect of the invention, the pattern is formed by digital inkjet printing, screen printing, flexography, or by mixing colouring agents into the mixture powders. According to a preferred aspect, at least the upper surface of the slab may comprise a relief structure, comprising recesses and protrusions for example. Preferably, the relief structure has characteristics corresponding to the pattern, for example recesses or protrusions directed along the grains of the natural stone, so as to make the pattern formed on the slab more realistic. The relief structure may be formed directly in the slab 1 on the construction material, preferably by suitable forming techniques such as the use of rollers or structured moulds, or may be formed in a layer placed at least on the upper surface of the slab. Said layer may be formed by the pattern itself and/or by a protective layer applied on the pattern.

According to a further aspect of the invention, the slab may comprise a protective layer, preferably translucent or transparent, for example a glaze, applied on top of the pattern and configured to cover, partially or totally, at least the upper surface of the slab. The protective layer may be applied according to a specific design, for example at least partially corresponding to the pattern, so as to cover the pattern and/or to define the relief structure. The protective layer may also be configured to improve the surface properties of the slab, for example antibacterial properties, cleanability, wettability, scratch and/or wear resistance, or anti-slip or smog resistance properties. For example, the protective layer may comprise additives or fillers capable of increasing said surface properties. According to one aspect of the invention, a worktop, for example a bathroom, kitchen or laboratory top, comprising a slab as described above, is provided. For example, the worktop may be produced by cutting the slab to the desired size and shape as required for the intended end use. The worktop may further comprise one or more openings for the installation of accessories such as a washbasin or cooktop.

Another aspect of the invention also provides an exterior or interior wall of a building comprising one or more slabs as described above which are, for example, fixed by suitable mechanical supports to a supporting frame.

Another aspect of the invention provides a method for producing an article comprising the ceramic construction material as described above.

The raw materials are milled in a dry or wet state, and mixed with one another in the powder state to form the mixture. The expression "wet milling" is taken to mean a process in which the raw materials are milled in the presence of a liquid vehicle, usually water, forming a slurry or slip. The slip has a liquid content of between 35% and 40% of the vehicle. The expression "dry milling" is taken to mean a process in which the raw materials are milled without adding water or other liquids. After milling, the raw materials are in the powder state, in which the particles have a maximum size of less than 200 µm, or preferably less than 150 µm, for example less than 100 µm.

In the case of wet milling, the slip is atomized to eliminate the excess liquid phase and to produce a granulated mixture with a residual moisture content of between 4% and 10%. Conversely, in the case of dry milling, a quantity of water is added to the mixture after the milling, to provide a moisture content of between 4% and 10%. The residual moisture content of the mixture is necessary to activate the plastic behaviour of the clays, allowing the formation of a green blank having sufficient mechanical strength.

The mixture is then shaped to form a green blank. The blank may be shaped by various shaping techniques, preferably pressing or extrusion. According to a preferred shaping method, the mixture is deposited on a conveyor belt to form a substantially continuous layer of mixture. The mixture may be loaded on to the belt together with one or more colouring agents to form the pattern. The colouring agents may be mixed with the mixture by suitable loading devices so as to form the desired pattern.

The layer of mixture is then compacted by means of a belt compactor so as to provide a pre-compacted powder product.

The pre-compacted powder strip is then cut into a plurality of pre-compacted sections according to the size of the slab to be produced. The pre-compacted sections are then loaded into a mould of an isostatic press to produce the green blank. The sections are preferably pressed at a pressure of between 300 and 500 kg/cm². It is not excluded that the shaping step may comprise isostatic pressing only, without pre-compacting. According to one aspect of the invention, during the pre-compacting step the pre-compacted powder product may be provided with a surface structure having relief features. For example, said surface structure may be formed by means of a suitably shaped belt of the compactor. Preferably, the relief structure may have characteristics correlated with the pattern; for example, it may have relief features which are developed substantially along the direction of the grain of the wood or stone represented by the pattern. However, there is no reason why the surface structure should not be produced during the isostatic pressing by means of a structured mould or by other techniques.

The pressed section is then dried at a temperature of more than 80°C, for example more than 100°C, to remove the residual moisture content and thus produce a green slab. Before or during the drying step, the slab may be decorated by digital printing, screen printing or flexography. According to one aspect of the invention, a transparent protective layer such as a transparent or translucent glaze may be applied to the slab. The green slab is then fired in a kiln at a maximum temperature of more than 1160°C, or preferably more than 1180°C, for example about 1190°C. In order to achieve complete sintering of the slab, the firing cycle has a total duration of more than 35 minutes, or preferably more than 50 minutes, for example 55 minutes.

The sintered slab may then be trimmed, polished and/or cut to form the desired end product.

Further characteristics and advantages of the invention will be apparent from a perusal of the following examples, provided solely by way of non-limiting example, with the support of the figures shown on the appended sheets.
Figure 1 is an axonometric view of a slab comprising a construction material in a first embodiment of the invention.
Figure 2 is a side view of the slab of Figure 1.
Figure 3 is an enlargement of the detail F3 of Figure 2.
Figure 4 is an enlargement of the detail F3 of Figure 2 in a first variant.
Figure 5 is an enlargement of the detail F3 of Figure 2 in a second variant.
Figure 6 is an axonometric view of a slab comprising a construction material in a second embodiment of the invention.
Figure 7 is a side view of the slab of Figure 6.
Figure 8 is an enlargement of the detail F8 of Figure 7.
Figure 9 is an enlargement of the detail F8 of Figure 7 in a first variant.
Figure 10 is an enlargement of the detail F8 of Figure 7 in a second variant.

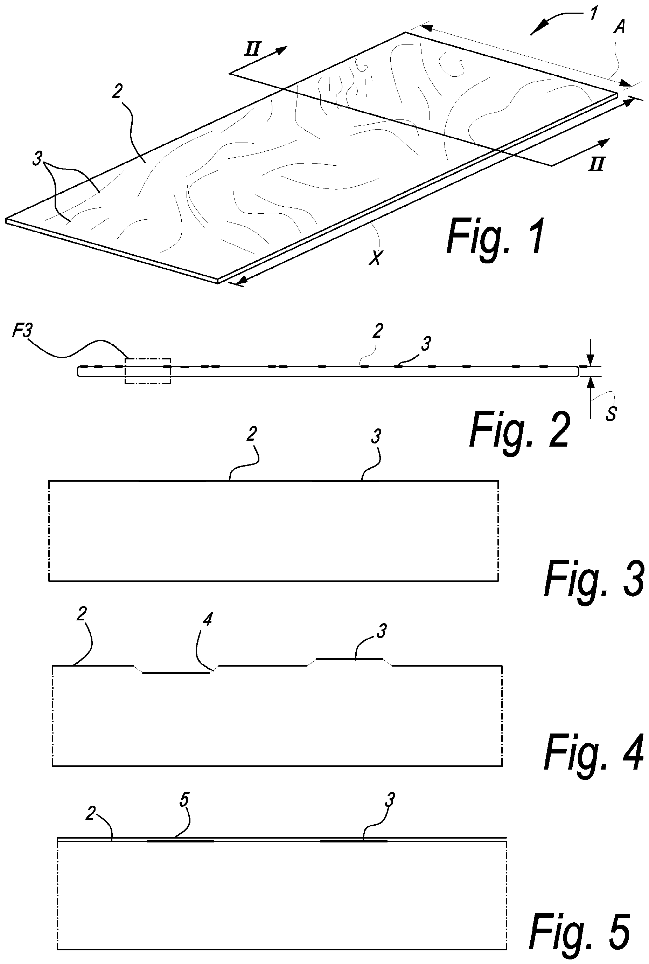

Figure 1 shows a slab 1 made with the ceramic construction material according to the invention, for example as shown in the tables below. The slab 1 is preferably of rectangular shape and has a length X of more than 1.25 m, even more preferably more than 2 m, for example 3 m, and a width A of more than 1 m, even more preferably more than 1.5, for example 2 m. The slab 1 also has a thickness S of more than 5 mm, for example more than 15 mm, for example about 30 mm.

The slab 1 comprises an upper surface 2 having a pattern 3, produced by digital inkjet printing for example. In the illustrated example, the pattern 3 is intended to simulate the grain of natural stone. In the present first embodiment, as shown in Figures 2 and 3, the pattern 3 is present only on the upper surface 2 of the slab 1, anyway it is not excluded that the pattern 3 could be reproduced also on the edges or the lower surface of the slab 1.

Figure 4 shows a variant of the first embodiment in which at least the upper surface 2 of the slab 1 comprises a relief structure 4, comprising recesses and protrusions for example.

Preferably, the relief structure 4 has characteristics corresponding to the pattern 3, for example recesses or protrusions directed along the grain of the natural stone.

Figure 5 shows a further variant of the invention, in which the slab 1 may comprise a protective layer 5, preferably translucent or transparent, for example a glaze, applied on top of the pattern 3 and configured to cover, at least partially, the upper surface 2 of the slab 1.

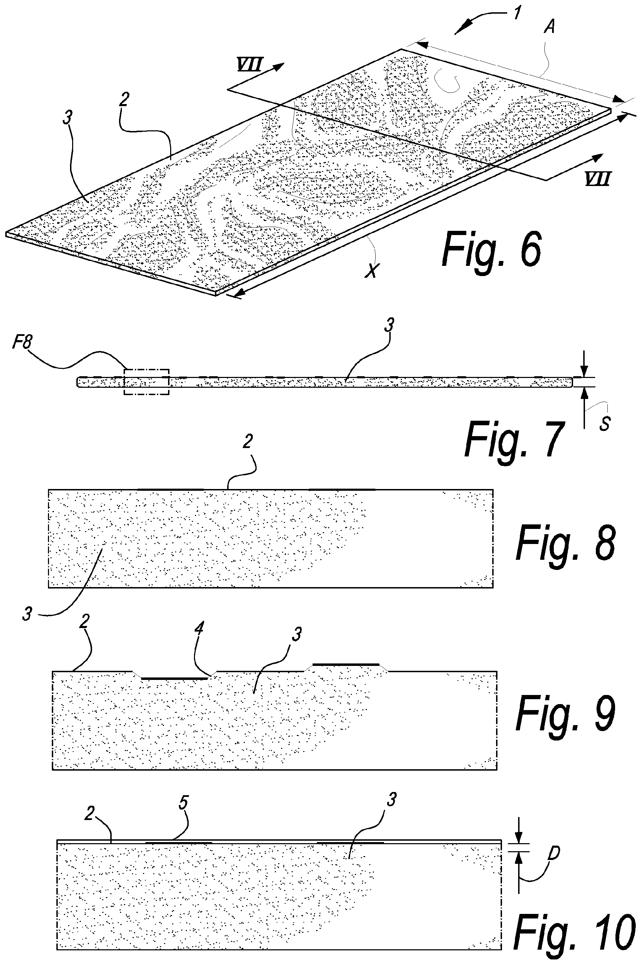

Figure 6 shows a second embodiment in which all the surfaces of the slab 1 comprise the pattern 3. In greater detail, in the present second embodiment the pattern 3 is formed by mixing colouring agents with the powder of the ceramic construction material mixture during the shaping step. In this embodiment, the pattern 3 is present in the slab through a predetermined depth D of the thickness S of the slab, where D is at least 3 mm, or preferably throughout the thickness S of the slab 1, as shown in Figures 7 to 10. In greater detail, in the embodiment shown in Figures 5 to 10, the pattern 3 is formed partially by a colouring agent dispersed in the ceramic material of the body of the slab, and partially by an impression produced on the upper surface 2 as in the first embodiment described above.

Figures 9 and 10 show variants of the second embodiment in which the slab comprises the relief structure 4 and/or the protective layer 5 as described above.

### EXAMPLE 1

In the present example, a mixture was prepared with the composition shown in Table 1:

**Table 1**

| Component | % by weight |
|---|---|
| Kaolin | 10 |
| Illite | 21 |
| Sodium feldspar | 38 |
| Frit (CMAS) | 12 |
| Quartz | 9 |
| Zirconium silicate | 10 |

The mixture was wet milled in a continuous cylindrical mill with aluminium (Al₂O₃) milling elements until a slip with 38% by weight of water was produced, with particulate material having a maximum size of less than 100 µm.

The slip was then atomized to produce a granulated product with a water content of 5%.

The atomized mixture was formed into slabs by isostatic pressing at 300 kg/cm² and subsequently dried. The green slabs were fired at 1180°C for 60 minutes.

In this way, slabs with the following dimensions were produced: thickness S 12 mm, length X 3 m, width A 1.6 m.

The resulting slabs also have the following characteristics: colour coordinates L 93, W 67, Y 6, water absorption 0.1%, glass phase 60%, stain resistance class 5.

### EXAMPLE 2

In the present example, a mixture was prepared with the composition shown in Table 2.

**Table 2**

| Component | % by weight |
|---|---|
| Kaolin | 12 |
| Illite | 23 |
| Potassium feldspar | 40 |
| Frit (CMAS) | 14 |
| Zirconium silicate | 11 |

The mixture was wet milled in a continuous cylindrical mill with aluminium (Al₂O₃) milling elements until a slurry with 40% by weight of water was produced, with particulate material having a maximum size of less than 100 µm.

The slip was then atomized to produce a granulated mixture with a water content of 5%.

The atomized mixture was formed into slabs by isostatic pressing at 400 kg/cm² and subsequently dried. The green slabs were fired at 1180°C for 62 minutes.

In this way, slabs with the following dimensions were produced: thickness S 10 mm, length X 1.2 m, width A 2.4 m.

The resulting slabs also have the following characteristics: colour coordinates L 94, W 67, Y 5, water absorption 0.08%, glass phase 62%, stain resistance class 5.

## Claims

1. Ceramic construction material having a luminosity value L of more than 92.

2. Material according to Claim 1, wherein the luminosity value L is more than 94.

3. Material according to any of the preceding claims, having a white value W of more than 60, preferably more than 64, and a yellow value Y of less than 9, preferably less than 7.

4. - Material according to any of the preceding claims, having a water absorption coefficient of less than 0.5%, or preferably less than 0.1%.

5. Slab comprising a construction material according to any of the preceding claims.

6. Slab according to Claim 5, having a thickness of more than 6 mm, preferably more than 15 mm, or more preferably 30 mm.

7. Slab according to any of Claims 4 and 5, comprising at least an upper surface having a pattern.

8. Slab according to Claim 7, wherein the pattern is present through a depth (D) of at least 3 mm of the thickness (S) of the slab.

9. Slab according to Claim 8, wherein the pattern is present throughout the thickness (S) of the slab.

10. Slab according to any of Claims 7 to 9, wherein the pattern is formed by particles of pigment dispersed in the material.

11. Slab according to Claim 7, wherein the pattern is digitally printed.

12. A worktop comprising a slab according to any of Claims 5 to 11.

13. A cladding panel comprising a slab according to any of Claims 5 to 11.
